# EUROPEAN PATENT SPECIFICATION

(11) **EP 3 513 174 B1**
(45) Date of publication and mention of the grant of the patent: **27.11.2024**
(21) Application number: 17781184.1
(22) Date of filing: 12.09.2017
(51) Int. Cl.: G01N 21/90, B29C 45/17, B29C 45/76

(54) **INSPECTION DEVICE AND METHOD FOR PARISONS AND MACHINE FOR MAKING PARISONS COMPRISING THE DEVICE**
INSPEKTIONSVORRICHTUNG UND -VERFAHREN FÜR VORFORMLINGE UND MASCHINE ZUR HERSTELLUNG VON VORFORMLINGEN MIT DER VORRICHTUNG
DISPOSITIF ET PROCÉDÉ D'INSPECTION DE PARAISONS ET MACHINE DE FABRICATION DE PARAISONS COMPRENANT LE DISPOSITIF

(30) Priority: 13.09.2016 IT 201600092208
(43) Date of publication of application: 24.07.2019
(73) Proprietor: Sacmi Cooperativa Meccanici Imola Societa' Cooperativa, 40026 Imola (IT)
(72) Inventor: LAICO, Donato, 40026 Imola (IT); BERTUOL, Arnaldo, 31020 San Pietro Di Feletto (IT); MARASTONI, Daniele, 40017 San Giovanni In Persiceto (IT)
(74) Representative: Conti, Marco
(86) International application number: PCT/IB2017/055481
(87) International publication number: WO 2018/051227

(56) References cited:
- WO-A1-2016/020683
- WO-A2-2012/001414
- US-A1- 2006 219 609

## Description

### Technical field

This invention relates to an inspection device and method for parisons and to a machine for making parisons comprising the device.

### Background art

A prior art inspection device for parisons is described in publication WO2016/020683.

That publication describes an inspection system with a detection head equipped with cameras and movable along longitudinal guides in such a way that one row of parisons held in a stationary position is inspected each time the detection head passes.

The parisons are initially carried in a containment device provided with a 12x12 array of seats holding respective parisons which are delivered in rows onto respective carrier slides movable longitudinally in a direction parallel to the detection head.

Once each slide has been brought into the detection area, the slide is stopped and the detection head is triggered and made to move translationally along the respective longitudinal guide.

The Applicant has found that the disadvantage of this type of inspection system is that the detection head has to perform a very high number of passes in order to complete inspection of all the parisons. This brings to the fore relatively stringent production limitations.

Moreover, the long length of time the parisons have to remain inside the inspection device may lead to excessive alteration of the temperature profiles of the parisons, thus adversely affecting the subsequent stages of the production process.

Other parison inspection devices are described in patent documents US2006/219609A1 and WO2012/001414A2.

### Disclosure of the invention

The aim of this invention is to provide an inspection device for parisons and an inspection method for parisons, as well as a machine for making parisons comprising the device, which can overcome the above mentioned disadvantages of the prior art.

This aim is achieved by the inspection device for parisons and by the inspection method for parisons as according to one or more of the appended claims.

More specifically, the device comprises at least a first conveying means having, on one side of it (the receiving side), a plurality of seats, arranged in an array configuration, for receiving respective parisons.

It should be noted that in the array of receiving seats, the parisons are arranged according to a plurality of rows and a plurality of columns (the number of parisons in each row being equal to the number of columns). In a possible embodiment, the first conveying means is configured to simultaneously receive the parisons of the plurality of parisons, simultaneously occupying all the seats of the plurality of receiving seats (positioned on that face).

The first conveying means is movable between a first station for receiving the parisons and a second station for releasing the parisons. The first conveying means is movable between the first and second stations along a trajectory having at least one stretch which is transverse, preferably perpendicular, to the longitudinal axis of the parisons on the first conveying means.

Preferably, the plurality of seats is formed on a flat face; thus, the seats in the plurality of seats are coplanar or substantially coplanar. Preferably, the parisons housed in the seats of the plurality of seats are extracted simultaneously directly from the mould.

The device includes at least a first optical detection device. In an example embodiment, the first optical detection unit faces the first conveying means on the parison receiving side of the latter; this is true at least at the transverse, preferably perpendicular, stretch of the trajectory to inspect at least one portion of the parisons which faces the first optical detection unit. In other words, the first optical detection unit is oriented (relative to the first conveying means) in such a way as to see the parison receiving seats on the first conveying means. In an embodiment, the parison receiving seats on the first conveying means include holes and are configured to receive the parisons bottom down in the holes in such a way that the opening of each parison is directed away from the parison receiving seats on the first conveying means to be inspected by the first optical detection unit when the first conveying means passes through the optical path (of the cameras) of the first optical detection unit.

The first optical detection unit and the first conveying means are movable relative to each other. In a possible embodiment, the first optical detection unit is located at a position which is stationary (or movable in the opposite direction) relative to the movement of the first conveying means (the latter movement being along the aforementioned trajectory), to produce a relative movement between the first conveying means and the first optical detection unit.

This allows inspecting all the parisons associated with the array during the passage from the first to the second station.

It should be noted that the expression "optical detection unit" is used to denote a unit that includes all the electronic components necessary for capturing images; for example, the unit includes at least a camera, a lens and an illuminator.

In a possible embodiment, the first optical detection unit comprises at least one camera which is linear and elongate in shape. Preferably, the first optical detection unit is located at a stationary position, at least during detection, and is configured to perform one inspection (take one snapshot) at least in a detection plane lying transversely to the transverse stretch of the trajectory of the first conveying means to inspect one after the other consecutive rows of parisons carried by the first conveying means. This allows the camera to detect consecutive rows of parisons one after the other during the feed movement of the first conveying means. Preferably, the detection plane is parallel to one of the two lines of the parison array when the first conveying means passes the transverse stretch of the trajectory. More preferably, the detection plane is vertical and detection occurs while the first conveying means moves in a horizontal direction, with the parisons arranged in the form of an array lying in a vertical plane.

The inspection device also comprises a second conveying means having, on one side of it, a plurality of respective seats for receiving an array of respective parisons and movable between the second station, where it receives a plurality of parisons from the first conveying means while maintaining the array form, and a third station for unloading the parisons, where the second conveying means is configured to hold the parisons at the ends of the parisons opposite the first conveying means. For example, the first conveying means grips each parison by its bottom end and exposes the mouth of the parison to the first optical detection unit, whilst the second conveying means grips each parison by its mouth and/or neck. The second conveying means is movable between the second and third stations along a trajectory having at least one stretch which is transverse, preferably perpendicular, to the longitudinal axis of the parisons carried by the second conveying means, and the device also comprises a second optical detection unit facing the second conveying means on the side of the latter which receives the parisons at least at the transverse, preferably perpendicular, stretch of the trajectory of the second conveying means to inspect at least one portion of the parisons which faces the second optical detection unit. With these features, it is possible to inspect both ends of the parisons, and thus, ideally, to perform a complete inspection, while the parisons are being transferred.

The second conveying means is preferably configured to perform a rotational movement between the second and the third station, such as to vary the orientation of the parisons carried by the second conveying means. In one embodiment, this movement, which comprises a rotation and/or a rototranslation takes the parisons in the array form from a vertical plane (second station) to a horizontal plane (third station), preferably with the parisons extending from the second conveying means downwards to where the second optical detection unit is located.

The second optical detection unit comprises preferably a plurality of fixed cameras located in an area where the trajectory followed by the second conveying means is parallel to a row of seats of the array of seats, preferably horizontal, with the array oriented in a horizontal plane in such a way that each camera operates on a respective main line of the array of seats of the second conveying means.

Preferably, the cameras of the second detection unit are arranged in a mutually offset configuration along the trajectory of the second conveying means.

Preferably, also, each camera of the second detection unit is positioned and shaped to detect the bottom and/or the main body, in succession, of the parisons of one row of parisons of the array of parisons carried by the second conveying means.

In one embodiment, the second detection unit comprises pairs of fixed cameras, each pair being associated with a respective row of parisons carried by the second conveying means to inspect the bottom and/or opposite sides of the main body of the parisons.

In one embodiment, the first conveying means is positioned and configured in such a way as to pick up a plurality of parisons arranged in array form directly from a mould in which the parisons are made. This allows integrating the inspection device into a machine of known type for making parisons using normal procedures for extracting and transferring the parisons from the mould.

At the third station, the device also comprises a sorting means provided with an array of seats for receiving parisons and compatible with the array of seats of the second conveying means in order to receive the parisons from the second conveying means, each seat being equipped with a respective mechanism for releasing or retaining the parison in the seat; the sorting means being movable between a first position, above a container for collecting conforming parisons, and a second position, above a container for defective parisons; the device further comprising a control unit connected to the optical detection units and driving the releasing/retaining mechanism in order to allow each parison to be released into one of the containers, as required.

The method comprises the steps of gripping a plurality of parisons by their first ends in a pickup station using a first conveying means on which the parisons are arranged in the form of an array; transferring the parisons carried by the first conveying means to a second station for releasing the parisons, following a trajectory having at least one stretch which is transverse, preferably perpendicular, to the longitudinal axis of the parisons carried by the first conveying means. The method comprises at least a first step of subjecting the parisons to optical inspection by means of a first fixed optical detection unit during the step of transferring the parisons from the first to the second station while the parisons are in motion, wherein the first optical detection unit faces the first conveying means on the side of the latter which receives the parisons at least at the transverse, preferably perpendicular, stretch of the trajectory to inspect at least one portion of the parisons which faces the first optical detection unit.

The first step of subjecting the parisons to optical inspection is performed by means of at least a first optical detection unit (which, in a possible embodiment, includes a linear camera). The first optical detection unit is preferably elongate in shape. In one embodiment, the first optical detection unit is located at a stationary position, at least during detection, and is configured to perform one inspection at least in a detection plane lying transversely, preferably perpendicularly, to the transverse/perpendicular stretch of the trajectory of the first conveying means to inspect one after the other consecutive rows of parisons carried by the first conveying means. This allows the camera to detect consecutive rows of parisons one after the other during the feed movement of the first conveying means. Preferably, the detection plane is parallel to one of the two lines of the parison array when the first conveying means passes the transverse stretch of the trajectory. More preferably, the detection plane is vertical and detection occurs while the first conveying means moves in a horizontal direction, with the parisons arranged in the form of an array lying in a vertical plane.

The method also comprises a step of transferring the parisons from the first conveying means to a second conveying means at the second station, where the second conveying means has, on one side of it, a plurality of respective seats for receiving an array of respective parisons and movable between the second station, where it faces the first conveying means to receive the plurality of parisons from the first conveying means while maintaining the array form, and a third station for unloading the parisons, where the second conveying means holds the parisons at the ends of the parisons opposite the first conveying means. For example, the first conveying means grips each parison by its bottom end and exposes the mouth of the parison to the first optical detection unit, whilst the second conveying means grips each parison by its mouth and/or neck. The second conveying means is movable between the second and third stations along a trajectory having at least one stretch which is transverse, preferably perpendicular, to the longitudinal axis of the parisons carried by the second conveying means. The method also comprises a second step of optically inspecting the parisons by means of a second optical detection unit facing the second conveying means on the side of the latter which receives the parisons at least at the transverse, preferably perpendicular, stretch of the trajectory of the second conveying means to inspect at least one portion of the parisons which faces the second optical detection unit.

In an embodiment, the second optical detection unit comprises a plurality of fixed cameras located in an area where the trajectory followed by the second conveying means is parallel to a row of seats of the array of seats, and the second inspection step is performed during the movement of the second conveying means to inspect each line of parisons with a respective camera of the plurality of cameras, each line of parisons being aligned with the direction of movement of the second conveying means during detection.

Preferably, the cameras of the second detection unit are arranged in a mutually offset configuration along the trajectory of the second conveying means.

Further, in an embodiment, the step of gripping the parisons in the first pickup station by means of the first conveying means is accomplished by picking up a plurality of parisons arranged in array form directly from a mould in which the parisons are made. In one embodiment, the parisons on the first conveying means are oriented in such a way that the mouth of each parison faces the first detection unit. In a different embodiment, the parisons on the first conveying means are oriented in such a way that the bottom of each parison faces the first detection unit.

The method also comprises the possibility of inspecting the parisons on the first conveying means during a return step in which the conveying means returns from the second station to the first station. In effect, the first conveying means is configured to receive simultaneously a number of parisons which is a multiple (for example a quadruple) of the number of parisons picked up in the first station (for example from the mould) or released to the second conveying means in the second station. In this configuration, the parisons not released in the second station undergo at least one further return and-forward movement cycle on the first conveying means.

### Brief description of the drawings

These and other features of the invention will become more apparent from the following description of a preferred embodiment of it, illustrated purely by way of non-limiting example in the accompanying drawings which schematically illustrate an inspection device for parisons according to the invention in a sequence of operating steps: More specifically, in the accompanying drawings:

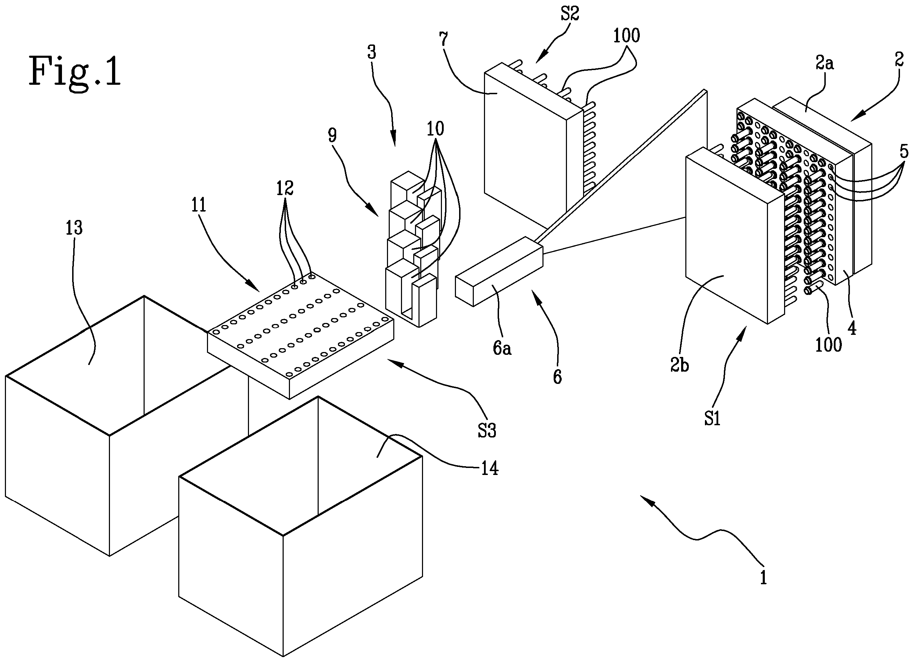

- Figure 1 illustrates the inspection device in a step of extracting parisons from a mould;

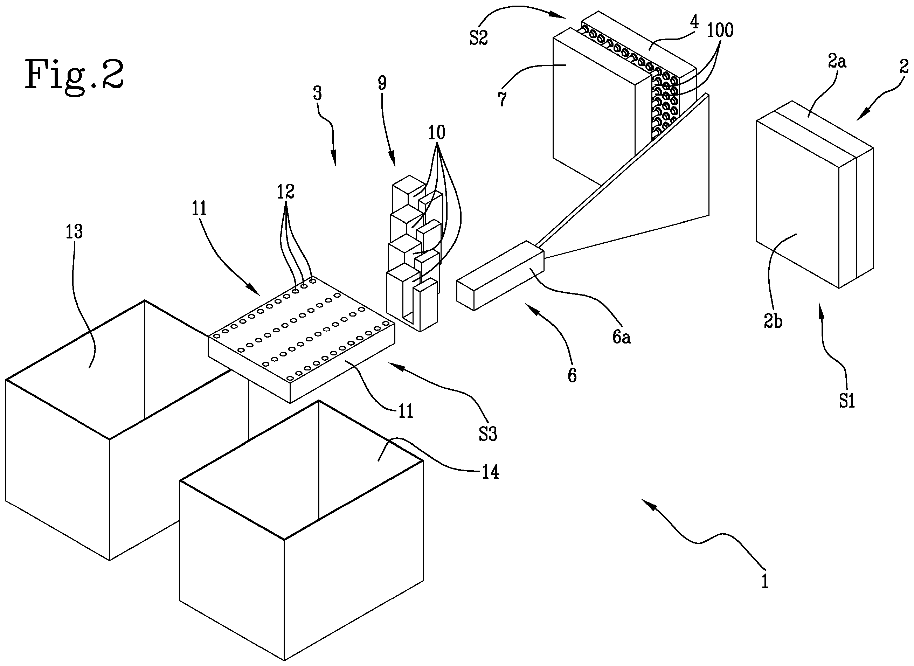

- Figure 2 illustrates the inspection device in a step of transferring parisons from a first to a second conveying means;

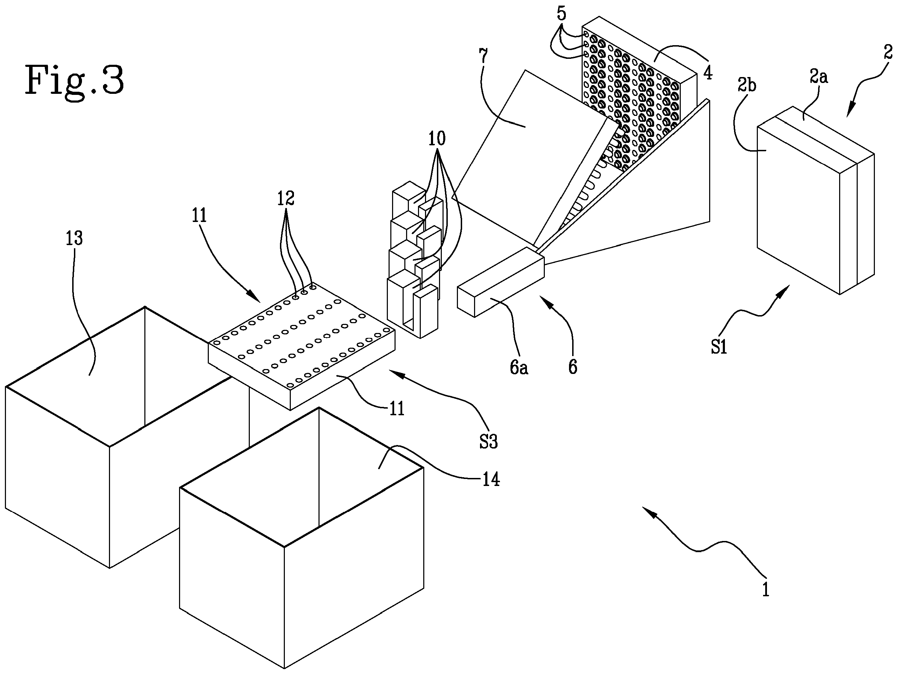

- Figure 3 illustrates the inspection device in a step of moving the second conveying means towards a second optical detection unit;

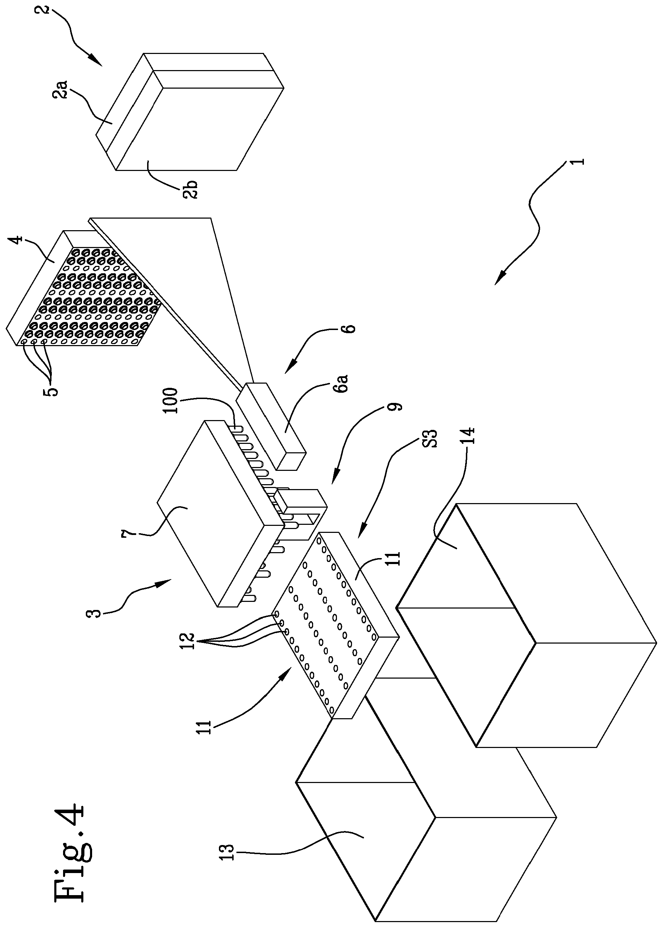

- Figure 4 illustrates the inspection device in a step of passing the parisons associated with the second conveying means through the second optical detection unit;

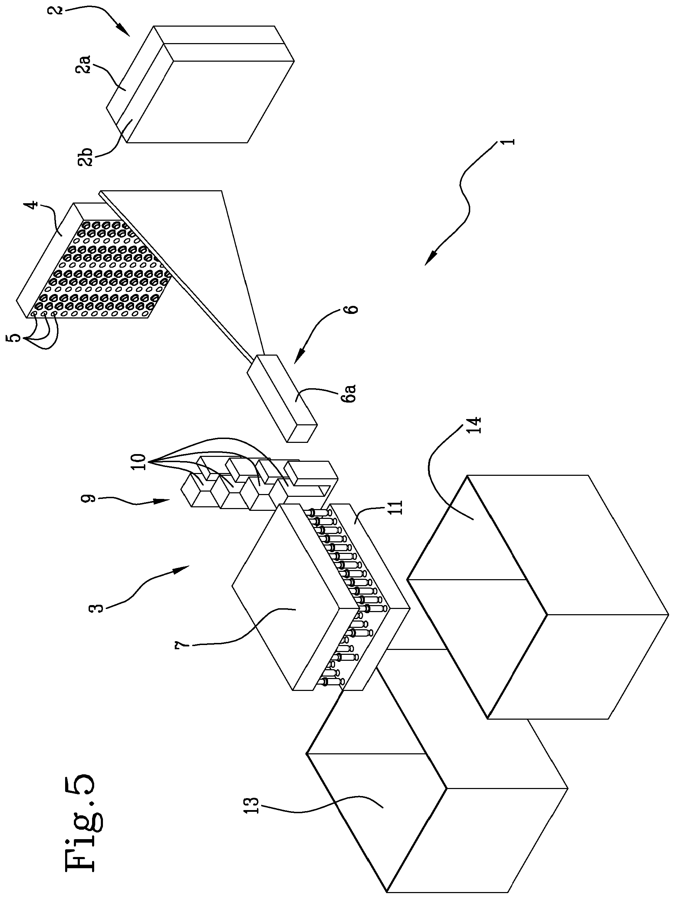

- Figure 5 illustrates the inspection device in a step of transferring parisons from the second conveying means to a sorting means;
- Figure 6 illustrates the inspection device in a step of transferring parisons from the sorting means to a container for defective parisons;
- Figure 7 illustrates the inspection device in a step of transferring parisons from the sorting means to a container for conforming parisons.

### Detailed description of preferred embodiments of the invention

In the accompanying drawings, the numeral 1 denotes in its entirety a machine for making parisons 100, or parison forming machine 1. In one embodiment, the machine 1 is an injection moulding machine. This machine is preferably a reciprocating mould machine, that is to say, it simultaneously moulds a plurality of parisons, cyclically, at predetermined intervals (necessary for the machine to be reloaded after each moulding cycle).

In a different embodiment, the machine 1 might be a compression moulding machine.

The machine 1 has a frame (that is, a supporting structure), not illustrated in the drawings.

The machine 1 comprises at least one mould 2 for forming the parisons, and downstream of the mould 2, an inspection device 3 according to one or more of the aspects of this description, for the parisons 100.

In at least one embodiment, the inspection device 3 is (at least partly) integrated in the machine 1.

The mould 2 includes a first mould head (or half-mould) 2A and a second mould head (or half-mould) 2B.

The mould 2 is configured to make a plurality of parisons 100 simultaneously, arranged in array form.

In the context of this description, the term "array" is used to denote an arrangement in rectangular series, that is to say, an arrangement of "m x n" elements, where "m" and "n" are integers greater than or equal to 1 (for example, if m=1 and n=10, there is an array with a single row of 10 elements).

In a possible but non-limiting embodiment according to what is illustrated in the drawings, the array distribution is 12x12 or 12x4, according to the component selected, as described below.

As shown in the drawings, the mould 2 is configured to simultaneously make an array of 12x4 parisons 100, that is to say, four rows of twelve parisons each.

The mould 2 comprises two half moulds 2A, 2B which, once moved apart, allow the 12x4 parisons 100 to be withdrawn by a pickup means, which is defined by a first conveying means 4 of the inspection device 3 and which is placed between the two half moulds in such a way as to withdraw the array of parisons 100 just made.

The first conveying means 4 has a tray- or panel-like configuration and has, on one side of it, a 12x12 array of seats 5, each seat 5 being designed to receive a respective parison 100 from the mould 2.

The first conveying means 4 is movable between a first station S1 for receiving the parisons 100 from the mould 2, and a second station S2 for releasing the parisons 100, and is movable between the first and second stations S1, S2 along a trajectory having at least one stretch which is transverse, preferably perpendicular, to the longitudinal axis of the parisons 100 on the first conveying means 4. By "longitudinal axis" of the parisons 100 is meant the axis around which each parison 100 extends and which coincides with the axis of each seat 5 and with the direction along which each parison 100 is inserted into the respective seat.5

Also, in the embodiment illustrated, the trajectory of the first conveying means 4 is schematically represented as rectilinear in the entire stretch between the two stations S1, S2.

The first conveying means 4 is configured (operated) to receive and store the parisons 100 to allow them to cool down in optimum manner. More in detail, the number of seats 5 of the first conveying means 4 is equal to three times the number of parisons 100 released by the mould 2. Thus, the operating logic of the machine 1 is such as to progressively store on the first conveying means 4, successive groups of 12x4 parisons received from the mould 2 and to release to the second station S2 at every forward cycle only the first of the three groups of 12x4 parisons. In other words, at each forward and return cycle, the first conveying means receives a new group of parisons 100 from the mould 2 and releases the "older" group. The inspection device comprises a first optical detection unit 6; the unit defines a respective field of vision (that is, an optical path). The first optical detection unit 6 is oriented in such a way that its field of vision intercepts the first conveying means 4 at least at one of the positions adopted by the first conveying means 4 as it moves from the first station S1 to the second station S2 and/or vice versa.

The first optical detection unit 6 and the first conveying means 4 are movable relative to each other to allow the first optical detection unit 6 to see in succession the parisons carried by the first conveying means 4 in rows (or, more generally, groups) which are offset, that is, spaced, along the direction of movement of the first conveying means 4 between the stations S1 and S2.

In one embodiment, the first optical detection unit 6 is stationary, whilst the first conveying means 4 is movable.

The position of the first optical detection unit 6 is selected in such a way that the first optical detection unit 6 faces the first conveying means 4 on the side of the latter which receives the parisons 100 at least when the first conveying means 4 travels the transverse, preferably perpendicular, stretch of the trajectory between the two stations S1, S2, to inspect at least one portion of the parisons 100 which faces the first optical detection unit 6.

In an example embodiment, the first optical detection unit 6 is connected to the frame of the machine 1; for example, it might be connected to an upright of the frame, positioned vertically (that is, positioned along a direction transverse to a direction of movement of the first conveying means 4 between the two stations S1, S2.

In a possible embodiment, the first optical detection unit 6 comprises at least one linear camera 6a. Preferably, the first optical detection unit 6 is elongate in shape, located at a stationary position, at least during detection of the parisons 100, and configured to perform one inspection at least in a detection plane lying transversely to the transverse stretch of the trajectory of the first conveying means 4 to inspect one after the other consecutive rows of parisons 100 carried by the first conveying means 4. Preferably, the detection plane is parallel to one of the two lines of the parison array when the first conveying means passes the transverse stretch of the trajectory. More preferably, the detection plane is vertical

(identified by the detection cone associated with the camera in the accompanying drawings) and detection occurs while the first conveying means 4 moves in a horizontal direction with the parisons 100 arranged in the form of an array lying in a vertical plane.

Downstream of the second station S2, the inspection device 3 also comprises a second conveying means 7. The second conveying means 7 has, on one side of it, a plurality of respective seats (not shown in the accompanying drawings), arranged in an array configuration, for receiving respective parisons 100. The second conveying means 7 is movable between the second station S2, where it receives a plurality of parisons 100 from the first conveying means 4 while maintaining the array form, and a third station S3 for unloading the parisons 100. The second conveying means 7 is configured to hold the parisons 100 at the ends of the parisons opposite the first conveying means 4. For example, the first conveying means 4 grips each parison 100 by its bottom end and exposes the mouth of the parison to the first optical detection unit 6, whilst the second conveying means 7 grips each parison 100 by its mouth and/or neck.

The second conveying means also has a tray- or panel-like configuration and is movable between the second and third stations S2, S3 along a trajectory having at least one stretch which is transverse, preferably perpendicular, to the longitudinal axis of the parisons 100 carried by the second conveying means 7.

More specifically, the second conveying means 7 is preferably configured to perform a rotational movement between the second and the third station S2, S3, such as to vary the orientation of the parisons 100 carried by the second conveying means 7. In one embodiment, this movement, which comprises a rotation and/or a rototranslation takes the parisons in the array form from a vertical plane (second station S2) to a horizontal plane, preferably with the parisons 100 extending downwards from the second conveying means 7.

The device 3 further comprises a second optical detection unit 9.

The second optical detection 9 unit faces the second conveying means 7 on the side of the latter which receives the parisons 100 at least at the transverse, preferably perpendicular, stretch of the trajectory of the second conveying means 7 to inspect at least one portion of the parisons 100 which faces the second optical detection unit 9. More specifically, in the embodiment illustrated, the second optical detection unit 9 is located underneath the second conveying means 7 when the latter is positioned horizontally.

The second optical detection unit 9 comprises one or more inspection units. In one embodiment, the second optical detection unit 9 comprises a plurality of inspection units. It should be noted that, preferably, the number of inspection units of the second optical detection unit 9 is equal to the number of rows along which the parisons are arranged in the second conveying means 7. In the example illustrated, the parisons on the second conveying means 7 are arranged in four rows and the second optical detection unit 9 has four inspection units; this number may vary from 1 to 2 or more, depending on the embodiment.

The second optical detection unit 9 comprises a plurality of cameras 10; the cameras 10 are configured to see (inspect) a lateral portion and a bottom portion of the parisons.

In one embodiment, each inspection unit of the second optical detection unit 9 comprises a respective plurality of cameras 10, as follows: one (or more) bottom cameras (oriented towards the second conveying means 7 to see the bottom of the parisons carried thereon); and one or more (preferably at least two, one of which on the right and the other on the left) lateral cameras oriented on opposite sides towards a lateral surface of the parisons which are operatively interposed between the lateral cameras).

The second optical detection unit 9 and the second conveying means 7 are movable relative to each other to allow the parisons (held by the second conveying means 7) to pass through optical detection unit 9.

In one embodiment, the second optical detection unit 9 is stationary, whilst the second conveying means 7 is movable. Thus, in this embodiment, the cameras 10 are fixed (that is, stationary) and located in an area where the trajectory followed by the second conveying means 7 is parallel to a row of seats of the array of seats, preferably horizontal, with the array oriented in a horizontal plane in such a way that each camera 10 operates on a respective main line of the array of seats of the second conveying means 7.

Preferably, the cameras 10 of the second detection unit 9 are arranged in a mutually offset configuration along the trajectory of the second conveying means 7.

Preferably, also, each camera 10 of the second detection unit is positioned and shaped to detect the bottom and/or the main body, in succession, of the parisons 100 of one row of the array of parisons 100 carried by the second conveying means 7.

In the embodiment illustrated, the second detection unit 7 comprises pairs of fixed cameras, each pair being associated with a respective row of parisons carried by the second conveying means to inspect the bottom and/or opposite sides of the main body of the parisons. Each pair of cameras 10 is mounted on opposite sides of a respective U-shaped mounting element in such a way as to detect laterally opposite portions of a single parison 100.

It should be noted that the second conveying means 7 has a plurality of gripping elements for holding the parisons 100. These gripping elements are preferably arranged in two or more parallel rows. In a possible embodiment, the second conveying means 7 comprises a plurality of tracks, where all the gripping elements in one row are mounted on one corresponding track. In a possible embodiment, the tracks of the second conveying means 7 are movable transversely to a direction defined by the tracks themselves. This allows the rows of parisons held by the second conveying means 7 to be spaced as required.

Operatively, when the second conveying means 7 interacts with the first conveying means 4, the row spacing is determined by the row spacing of the parisons on the first conveying means 4; when the second conveying means 7 interacts with the second optical detection unit 9, on the other hand, the parison row spacing, on the second conveying means 7, is (or may be) determined by (or set as a function of) an overall dimension of the inspection units of the second optical detection unit 9.

In a possible embodiment, the device includes a third station S3 located (immediately) downstream of the second detection unit 9.

In a possible embodiment, the device 3 comprises a sorting means 11. Preferably, the sorting means 11 can be positioned at the station S3.

In one embodiment, the sorting means 11 is provided with an array of respective seats 12 for receiving parisons 100. Preferably, the array defined by the sorting means 11 is compatible with the array of seats of the second conveying means 7 in order to receive the parisons 100 from the second conveying means 7. The sorting means 11 has a selective mechanism for releasing/retaining the parisons 100 in the respective seats 12. In one embodiment, each seat 12 of the sorting means 11 is equipped with a respective element for releasing/retaining the parison 100 in the seat 12.

The sorting means 11 is movable between a first position, above a container 13 for collecting conforming parisons, and a second position, above a container 14 for defective parisons. In one embodiment, the sorting means 11 is operatively positionable at a third position where it faces the second conveying means 7 to receive the parisons therefrom; the third position may coincide with the first position or with the second position, or it may be intermediate between the two (preferably the three positions are aligned along a direction transverse to the direction of movement of the second conveying means 7 from the first to the second station). In a possible embodiment, the seats 12 of the sorting means 11 include through holes (to be able to receive the parisons from above and release them from below without having to turn the sorting means upside down).

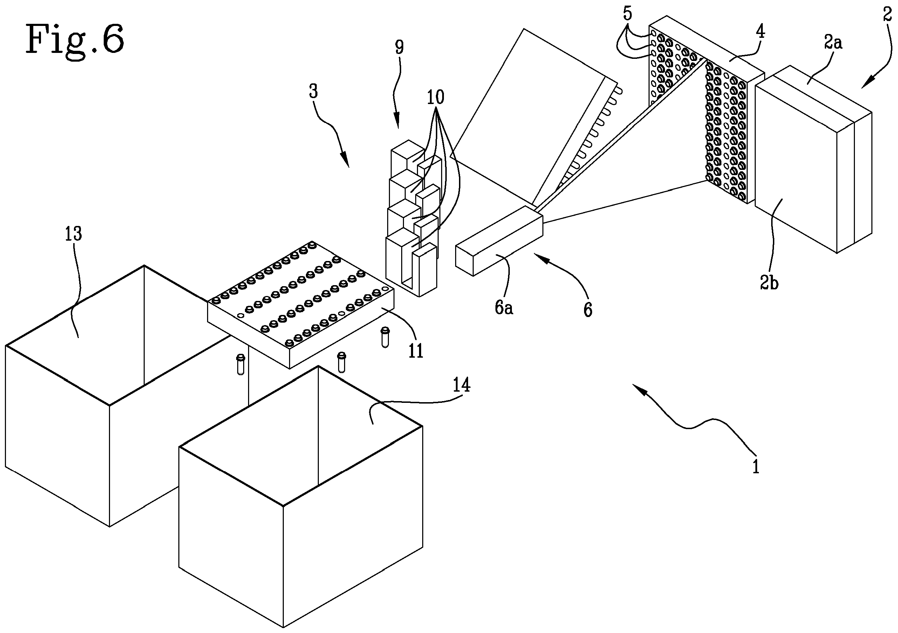

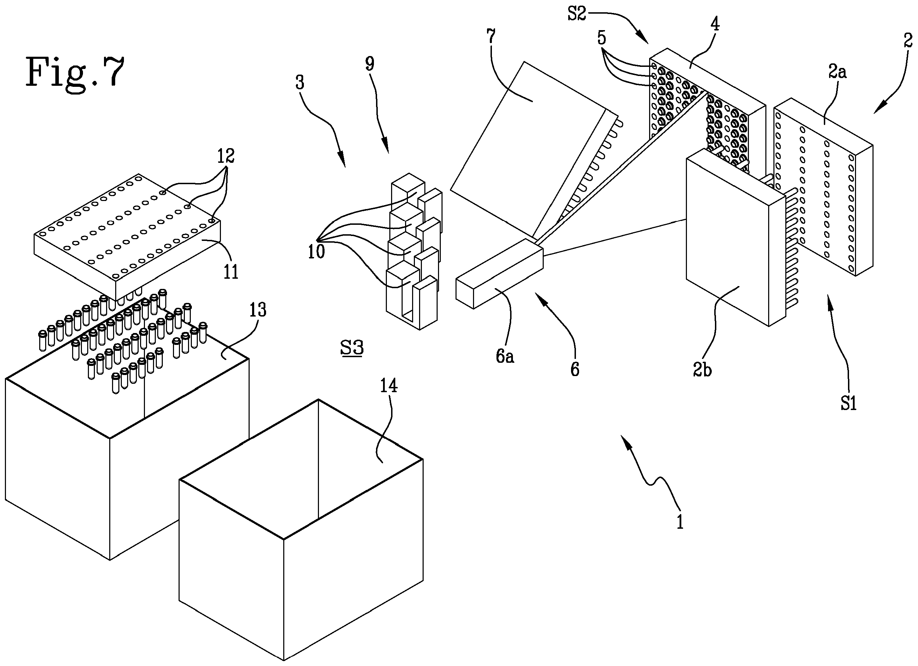

In a possible embodiment, the device 3 comprises a control unit (not illustrated) connected to the optical detection units 6, 9 and driving the releasing/retaining mechanism (of the sorting means 11) in order to allow each parison 100 to be released into one of the containers 13, 14 according to whether the parison 100 has been found to be conforming or defective (Figures 6 and 7). That way, it is possible to sort the parisons 100 and to automatically select those that conform with standards.

## Claims

1. An inspection device for parisons comprising at least a first conveying means (4) having, on one side of it, a plurality of seats (5) for receiving an array of respective parisons (100), wherein the first conveying means (4) is movable between a first station (S1) for receiving the parisons (100) and a second station (S2) for releasing the parisons (100) and wherein the first conveying means (4) is movable between the first and second stations (S1, S2) along a trajectory having at least one stretch which is transverse to the longitudinal axis of the parisons (100) on the first conveying means (4), wherein the device (1) comprises a first optical detection unit (6) located at a fixed position and facing the first conveying means (4) on the side of the latter which receives the parisons (100) at least at the transverse stretch of the trajectory to inspect at least one portion of the parisons (100) which faces the first optical detection unit (6), **characterized in that** it further comprises a second conveying means (7) having, on one side of it, a plurality of respective seats for receiving an array of respective parisons (100) and movable between the second station (S2), where it receives a plurality of parisons (100) from the first conveying means (4) and a third station (S3) for unloading the parisons (100), where the second conveying means (7) is configured to hold the parisons (100) at the ends of the parisons (100) opposite the portions of the parisons (100) gripped by the first conveying means (4), the second conveying means (7) being movable between the second and third stations (S2, S3) along a trajectory having at least one stretch which is transverse to the longitudinal axis of the parisons (100) on the second conveying means (7), the device (1) further comprising a second optical detection unit (9) facing the second conveying means (7) on the side of the latter which receives the parisons (100) at least at the transverse stretch of the trajectory of the second conveying means (7) to inspect at least one portion of the parisons (100) which faces the second optical detection unit (9).

2. The device according to claim 1, wherein the first optical detection unit (6) is elongate in shape, is located at a stationary position, at least during detection, and is configured to perform one inspection at least in a detection plane lying transversely to the transverse stretch of the trajectory of the first conveying means (4) to inspect one after the other consecutive rows of parisons (100) carried by the first conveying means (4).

3. The device according to claim 1 or 2, wherein the second conveying means (7) is configured to perform a rotational movement between the second and the third station (S2, S3), such as to vary the orientation of the parisons (100) carried by the second conveying means (7).

4. The device according to any one of the preceding claims, wherein the second optical detection unit (9) comprises a plurality of fixed cameras (10) located in an area where the trajectory followed by the second conveying means (7) is parallel to a row of seats of the array of seats of the second conveying means (7), in such a way that each camera (10) operates on a respective main line of the array of seats of the second conveying means (7), the fixed cameras (10) being configured and positioned to inspect the bottom and/or the main body of the parisons (100).

5. The device according to claim 4, wherein the cameras (10) of the second detection unit (9) are arranged in a mutually offset configuration along the trajectory of the second conveying means (7).

6. The device according to any one of the preceding claims, comprising a sorting means (11) having a plurality of seats (12) for receiving corresponding parisons from the second conveying means (7), and at least one release/retain mechanism for selectively releasing/retaining the parisons from/in the respective seats (12).

7. The device according to claim 6, comprising a control unit connected to the optical detection units (6, 9) and to the releasing/retaining mechanism of the sorting means (11) to control the release of the parisons as a function of the processing of data of images received from the optical detection units (6, 9).

8. The device according to any one of the preceding claims, wherein the first conveying means (4) is positioned and configured in such a way as to pick up a plurality of parisons (100) arranged in array form directly from a mould (2) in which the parisons (100) are made.

9. An inspection method for parisons, comprising the following steps:
- gripping a plurality of parisons (100) by their first ends in a first pickup station (S1) using a first conveying means (4) on which the parisons (100) are arranged in the form of an array;
- transferring the parisons (100) carried by the first conveying means (4) to a second station (S2) for releasing the parisons (100), following a trajectory having at least one stretch which is transverse to the longitudinal axis of the parisons (100) carried by the first conveying means (4);
- a first step of subjecting the parisons (100) to optical inspection by means of a first fixed optical detection unit (6), during the step of transferring the parisons (100) from the first to the second station (S1, S2) while the parisons (100) are in motion, the first optical detection unit (6) facing the first conveying means (4) on the side of the latter which receives the parisons (100) at least at the transverse stretch of the trajectory to inspect at least one portion of the parisons (100) which faces the first optical detection unit (6),
**characterized in that** it further comprises the following steps:
- transferring the parisons (100) from the first conveying means (4) to a second conveying means (7) at the second station (S2), the second conveying means (7) having, on one side of it, a plurality of respective seats for receiving an array of respective parisons (100) and movable between the second station (S2), where it faces the first conveying means (4) to receive a plurality of parisons (100) from the first conveying means (4) and a third station (S3) for unloading the parisons (100), where the second conveying means (7) holds the parisons (100) by the ends of the parisons (100) opposite the ends gripped by the first conveying means (4), the second conveying means (7) being movable between the second and third stations (S2, S3) along a trajectory having at least one stretch which is transverse to the longitudinal axis of the parisons (100) on the second conveying means (7),
- a second step of optically inspecting the parisons (100) by means of a second optical detection unit (9) facing the second conveying means (7) on the side of the latter which receives the parisons (100) at least at the transverse stretch of the trajectory of the second conveying means (7) to inspect at least one portion of the parisons (100) which faces the second optical detection unit (9).

10. The method according to claim 9, wherein the first step of subjecting the parisons (100) to optical inspection is performed by means of at least one linear camera (6a), which is elongate in shape, located at a stationary position, at least during detection, and configured to perform one inspection at least in a detection plane lying transversely to the transverse stretch of the trajectory of the first conveying means (4) to inspect one after the other consecutive rows of parisons (100) carried by the first conveying means (4).

11. The method according to claim 9 or 10, wherein the second optical detection unit (9) comprises a plurality of fixed cameras (10) located in an area where the trajectory followed by the second conveying means (7) is parallel to a row of seats of the array of seats of the second conveying means (7), and wherein the second inspection step is performed during the movement of the second conveying means (7) by inspecting each line of parisons (100) with a respective camera (10) of the plurality of cameras, each line of parisons (100) being aligned with the direction of movement of the second conveying means (7) during detection, the fixed cameras (10) being configured and positioned to inspect the bottom and/or the main body of the parisons (100).

12. The method according to claim 11, wherein the cameras (10) of the second detection unit (9) are arranged in a mutually offset configuration along the trajectory of the second conveying means (7).

13. The method according to any one of claims 9 to 12, wherein the second conveying means (7) is configured to perform a rotational movement between the second and the third station (S2, S3), such as to vary the orientation of the parisons (100) carried by the second conveying means (7).

14. The method according to any one of claims 9 to 13, wherein the step of gripping the parisons (100) in the first pickup station (S1) by means of the first conveying means (4) is accomplished by picking up a plurality of parisons (100) arranged in array form directly from a mould (2) in which the parisons (100) are made, the parisons (100) on the first conveying means (4) being oriented in such a way that the mouth of each parison (100) faces the first detection unit (6).

15. A machine for making parisons, comprising:
- a mould (2) for making a plurality of parisons (100) simultaneously, arranged in array form;
- a pickup means acting in conjunction with the mould (2) to withdraw the parisons (100) from the mould (2) in a single step of transferring all the parisons (100) while maintaining the array configuration;
- an inspection device (1) according to one or more of the preceding claims from 1 to 8, wherein the pickup means is defined by the first conveying means (4) of the inspection device (1).

## Patentansprüche

1. Inspektionsvorrichtung für Vorformlinge, umfassend mindestens erste Fördermittel (4), aufweisend auf einer Seite davon eine Vielzahl von Sitzen (5) zum Empfangen einer Anordnung jeweiliger Vorformlinge (100), wobei die ersten Fördermittel (4) zwischen einer ersten Station (S1) zum Empfangen der Vorformlinge (100) und einer zweiten Station (S2) zum Freigeben der Vorformlinge (100) bewegbar sind, und wobei die ersten Fördermittel (4) zwischen der ersten und der zweiten Station (S1, S2) entlang einer Bahn bewegbar sind, aufweisend mindestens ein Teilstück, das quer zur Längsachse der Vorformlinge (100) auf den ersten Fördermitteln (4) verläuft, wobei die Vorrichtung (1) eine erste optische Detektionseinheit (6) umfasst, die an einer fixen Position befindlich und den ersten Fördermitteln (4) auf deren Seite, die die Vorformlinge (100) empfängt, mindestens am Querteilstück der Bahn zugewandt ist, um mindestens einen Abschnitt der Vorformlinge (100) zu inspizieren, der der ersten optischen Detektionseinheit (6) zugewandt ist, **dadurch gekennzeichnet, dass** sie zudem zweite Fördermittel (7) umfasst, aufweisend auf einer Seite davon eine Vielzahl von jeweiligen Sitzen zum Empfangen einer Anordnung von jeweiligen Vorformlingen (100) und bewegbar zwischen der zweiten Station (S2), an der sie eine Vielzahl von Vorformlingen (100) von den ersten Fördermitteln (4) empfangen, und einer dritten Station (S3) zum Entladen der Vorformlinge (100), an der die zweiten Fördermittel (7) ausgelegt sind, um die Vorformlinge (100) an den Enden der Vorformlinge (100) zu halten, die den Abschnitten der Vorformlinge (100), die von den ersten Fördermitteln (4) gegriffen sind, entgegengesetzt sind, wobei die zweiten Fördermittel (7) zwischen der zweiten und der dritten Station (S2, S3) entlang einer Bahn bewegbar sind, aufweisend mindestens ein Teilstück, das quer zur Längsachse der Vorformlinge (100) auf den zweiten Fördermitteln (7) verläuft, wobei die Vorrichtung (1) zudem eine zweite optische Detektionseinheit (9) umfasst, die den zweiten Fördermitteln (7) auf deren Seite, die die Vorformlinge (100) empfängt, mindestens am Querteilstück der Bahn der zweiten Fördermittel (7) zugewandt ist, um mindestens einen Abschnitt der Vorformlinge (100), der der zweiten optischen Detektionseinheit (9) zugewandt ist, zu inspizieren.

2. Vorrichtung nach Anspruch 1, wobei die erste optische Detektionseinheit (6) eine längliche Form aufweist, zumindest während der Detektion an einer stationären Position befindlich und ausgelegt ist, um eine Inspektion zumindest in einer Inspektionsebene durchzuführen, die quer zum Querteilstück der Bahn der ersten Fördermittel (4) liegt, um die aufeinanderfolgenden Reihen von Vorformlingen (100), die von den ersten Fördermitteln (4) getragen werden, nacheinander zu inspizieren.

3. Vorrichtung nach Anspruch 1 oder 2, wobei die zweiten Fördermittel (7) ausgelegt sind, um eine rotatorische Bewegung zwischen der zweiten und der dritten Station (S2, S3) durchzuführen, sodass die Ausrichtung der Vorformlinge (100), die von den zweiten Fördermitteln (7) getragen werden, variiert wird.

4. Vorrichtung nach einem der vorhergehenden Ansprüche, wobei die zweite optische Detektionseinheit (9) eine Vielzahl von fixen Kameras (10) umfasst, die in einem Bereich befindlich sind, in dem die Bahn, der die zweiten Fördermittel (7) folgen, parallel zu einer Reihe von Sitzen der Anordnung von Sitzen der zweiten Fördermittel (7) angeordnet ist, sodass eine jede Kamera (10) auf einer jeweiligen Hauptlinie der Anordnung von Sitzen der zweiten Fördermittel (7) arbeitet, wobei die fixen Kameras (10) ausgelegt und positioniert sind, um die Unterseite und/oder den Hauptkörper der Vorformlinge (100) zu inspizieren.

5. Vorrichtung nach Anspruch 4, wobei die Kameras (10) der zweiten Detektionseinheit (9) in einer gegenseitig versetzten Auslegung entlang der Bahn der zweiten Fördermittel (7) angeordnet sind.

6. Vorrichtung nach einem der vorhergehenden Ansprüche, umfassend Sortiermittel (11), aufweisend eine Vielzahl von Sitzen (12) zum Empfangen entsprechender Vorformlinge von den zweiten Fördermitteln (7) und mindestens einen Freigabe-/Haltemechanismus, um die Vorformlinge selektiv von/in den jeweiligen Sitzen (12) zu lösen/zu halten.

7. Vorrichtung nach Anspruch 6, umfassend eine Steuereinheit, die mit den optischen Detektionseinheiten (6, 9) und mit dem Freigabe-/Haltemechanismus der Sortiermittel (11) verbunden ist, um die Freigabe der Vorformlinge abhängig von der Datenverarbeitung von Bildern, die von den optischen Detektionseinheiten (6, 9) empfangen wurden, zu steuern.

8. Vorrichtung nach einem der vorhergehenden Ansprüche, wobei die ersten Fördermittel (4) positioniert und ausgelegt sind, um eine Vielzahl von Vorformlingen (100), die in einer Anordnungsform angeordnet werden, direkt von einem Formwerkzeug (2) aufzunehmen, in dem die Vorformlinge (100) hergestellt werden.

9. Inspektionsverfahren für Vorformlinge, umfassend die folgenden Schritte:
- Greifen einer Vielzahl von Vorformlingen (100) an deren Enden in einer ersten Aufnahmestation (S1) unter Nutzung erster Fördermittel (4), auf denen die Vorformlinge (100) in der Form einer Anordnung angeordnet sind;
- Übergeben der Vorformlinge (100), die von den ersten Fördermitteln (4) getragen werden, an eine zweite Station (S2), um die Vorformlinge (100) freizugeben, wobei einer Bahn gefolgt wird, die mindestens ein Teilstück aufweist, das quer zur Längsachse der von den ersten Fördermitteln (4) getragenen Vorformlinge (100) verläuft;
- einen ersten Schritt zum Unterziehen der Vorformlinge (100) der optischen Inspektion mittels einer ersten fixen optischen Detektionseinheit (6) während des Schritts zum Übergeben der Vorformlinge (100) von der ersten an die zweite Station (S1, S2), während die Vorformlinge (100) in Bewegung sind, wobei die erste optische Detektionseinheit (6) den ersten Fördermitteln (4) auf deren Seite, die die Vorformlinge (100) empfängt, mindestens am Querteilstück der Bahn zugewandt ist, um mindestens einen Abschnitt der Vorformlinge (100) zu inspizieren, der der ersten optischen Detektionseinheit (6) zugewandt ist,
**dadurch gekennzeichnet, dass** es zudem die folgenden Schritte umfasst:
- Übergeben der Vorformlinge (100) von den ersten Fördermitteln (4) an zweite Fördermittel (7) an der zweiten Station (S2), wobei die zweiten Fördermittel (7) auf einer Seite davon eine Vielzahl von jeweiligen Sitzen zum Empfangen einer Anordnung von jeweiligen Vorformlingen (100) aufweisen und zwischen der zweiten Station (S2), an der sie den ersten Fördermitteln (4) zugewandt sind, um eine Vielzahl von Vorformlingen (100) von den ersten Fördermitteln (4) zu empfangen, und einer dritten Station (S3) zum Entladen der Vorformlinge (100), an der die zweiten Fördermittel (7) die Vorformlinge (100) an den Enden der Vorformlinge (100) halten, die den Enden, die von den ersten Fördermitteln (4) gegriffen sind, entgegengesetzt sind, bewegbar sind, wobei die zweiten Fördermittel (7) zwischen der zweiten und der dritten Station (S2, S3) entlang einer Bahn bewegbar sind, aufweisend mindestens ein Teilstück, das quer zur Längsachse der Vorformlinge (100) auf den zweiten Fördermitteln (7) verläuft,
- einen zweiten Schritt zum optischen Inspizieren der Vorformlinge (100) mittels einer zweiten optischen Detektionseinheit (9), die den zweiten Fördermitteln (7) auf deren Seite, die die Vorformlinge (100) empfängt, mindestens am Querteilstück der Bahn der zweiten Fördermittel (7) zugewandt ist, um mindestens einen Abschnitt der Vorformlinge (100), der der zweiten optischen Detektionseinheit (9) zugewandt ist, zu inspizieren.

10. Verfahren nach Anspruch 9, wobei der erste Schritt zum Unterziehen der Vorformlinge (100) der optischen Inspektion von mindestens einer linearen Kamera (6a) durchgeführt wird, die eine längliche Form aufweist, die zumindest während der Detektion an einer stationären Position befindlich und ausgelegt ist, um eine Inspektion zumindest in einer Inspektionsebene durchzuführen, die quer zum Querteilstück der Bahn der ersten Fördermittel (4) liegt, um die aufeinanderfolgenden Reihen von Vorformlingen (100), die von den ersten Fördermitteln (4) getragen werden, nacheinander zu inspizieren.

11. Verfahren nach Anspruch 9 oder 10, wobei die zweite optische Detektionseinheit (9) eine Vielzahl von fixen Kameras (10) umfasst, die in einem Bereich befindlich sind, in dem die Bahn, der die zweiten Fördermittel (7) folgen, parallel zu einer Reihe von Sitzen der Anordnung von Sitzen der zweiten Fördermittel (7) verläuft, wobei der zweite Inspektionsschritt während der Bewegung der zweiten Fördermittel (7) durchgeführt wird, indem eine jede Linie von Vorformlingen (100) mit einer jeweiligen Kamera (10) der Vielzahl von Kameras inspiziert wird, wobei eine jede Linie von Vorformlingen (100) fluchtend zur Bewegungsrichtung der zweiten Fördermittel (7) während der Detektion ausgerichtet ist und die fixen Kameras (10) ausgelegt und positioniert sind, um die Unterseite und/oder den Hauptkörper der Vorformlinge (100) zu inspizieren.

12. Verfahren nach Anspruch 11, wobei die Kameras (10) der zweiten Detektionseinheit (9) in einer gegenseitig versetzten Auslegung entlang der Bahn der zweiten Fördermittel (7) angeordnet sind.

13. Verfahren nach einem der Ansprüche 9 bis 12, wobei die zweiten Fördermittel (7) ausgelegt sind, um eine rotatorische Bewegung zwischen der zweiten und der dritten Station (S2, S3) durchzuführen, sodass die Ausrichtung der Vorformlinge (100), die von den zweiten Fördermitteln (7) getragen werden, variiert wird.

14. Verfahren nach einem der Ansprüche 9 bis 13, wobei der Schritt zum Greifen der Vorformlinge (100) in der ersten Aufnahmestation (S1) mittels der ersten Fördermittel (4) erfolgt, indem eine Vielzahl von Vorformlingen (100), die in einer Anordnungsform angeordnet werden, direkt von einem Formwerkzeug (2) aufgenommen wird, in dem die Vorformlinge (100) hergestellt werden, wobei die Vorformlinge (100) auf den ersten Fördermitteln (4) so ausgerichtet sind, dass die Öffnung eines jeden Vorformlings (100) der ersten Detektionseinheit (6) zugewandt ist.

15. Maschine zur Herstellung von Vorformlingen, umfassend:
- ein Formwerkzeug (2), um gleichzeitig eine Vielzahl von Vorformlingen (100) herzustellen, die in einer Anordnungsform angeordnet sind;
- Aufnahmemittel, die in Verbindung mit dem Formwerkzeug (2) wirken, um die Vorformlinge (100) in einem einzelnen Schritt zum Übergeben aller Vorformlinge (100) aus dem Formwerkzeug (2) zu ziehen, während die Anordnungsauslegung aufrechterhalten wird;
- eine Inspektionsvorrichtung (1) nach einem oder mehreren der vorhergehenden Ansprüche 1 bis 8, wobei die Aufnahmemittel durch die ersten Fördermittel (4) der Inspektionsvorrichtung (1) definiert sind.

## Revendications

1. Dispositif d'inspection de paraisons, comprenant au moins des premiers moyens de convoyage (4) ayant, sur un côté de ceux-ci, une pluralité de sièges (5) pour recevoir une matrice de paraisons respectives (100), dans lequel les premiers moyens de convoyage (4) sont mobiles entre une première station (S1) pour recevoir les paraisons (100) et une deuxième station (S2) pour libérer les paraisons (100) et dans lequel les premiers moyens de convoyage (4) sont mobiles entre les première et deuxième stations (S1, S2) le long d'une trajectoire ayant au moins un tronçon transversal à l'axe longitudinal des paraisons (100) sur les premiers moyens de convoyage (4), dans lequel le dispositif (1) comprend une première unité de détection optique (6) située à une position fixe et faisant face aux premiers moyens de convoyage (4) du côté de ces derniers qui reçoit les paraisons (100) au moins au niveau du tronçon transversal de la trajectoire pour inspecter au moins une portion des paraisons (100) qui fait face à la première unité de détection optique (6), **caractérisé en ce qu'**il comprend en outre des seconds moyens de convoyage (7) ayant, sur un côté de ceux-ci, une pluralité de sièges respectifs pour recevoir une matrice de paraisons respectives (100) et mobile entre la deuxième station (S2), où il reçoit une pluralité de paraisons (100) des premiers moyens de convoyage (4) et une troisième station (S3) pour décharger les paraisons (100), où les seconds moyens de convoyage (7) sont configurés pour maintenir les paraisons (100) aux extrémités des paraisons (100) à l'opposé des portions des paraisons (100) saisies par les premiers moyens de convoyage (4), les seconds moyens de convoyage (7) étant mobiles entre les deuxième et troisième stations (S2, S3) le long d'une trajectoire ayant au moins un tronçon transversal à l'axe longitudinal des paraisons (100) sur les seconds moyens de convoyage (7), le dispositif (1) comprenant en outre une seconde unité de détection optique (9) faisant face aux seconds moyens de convoyage (7) du côté de ces derniers qui reçoit les paraisons (100) au moins au niveau du tronçon transversal de la trajectoire des seconds moyens de convoyage (7) pour inspecter au moins une portion des paraisons (100) qui fait face à la seconde unité de détection optique (9).

2. Dispositif selon la revendication 1, dans lequel la première unité de détection optique (6) est de forme allongée, est située à une position stationnaire, au moins pendant la détection, et est configurée pour effectuer une inspection au moins dans un plan de détection s'étendant transversalement au tronçon transversal de la trajectoire des premiers moyens de convoyage (4) pour inspecter l'une après l'autre les rangées consécutives de paraisons (100) portées par les premiers moyens de convoyage (4).

3. Dispositif selon la revendication 1 ou 2, dans lequel les seconds moyens de convoyage (7) sont configurés pour effectuer un mouvement de rotation entre la deuxième et la troisième station (S2, S3), de manière à faire varier l'orientation des paraisons (100) portées par les seconds moyens de convoyage (7).

4. Dispositif selon l'une quelconque des revendications précédentes, dans lequel la seconde unité de détection optique (9) comprend une pluralité de caméras fixes (10) situées dans une zone où la trajectoire suivie par les seconds moyens de convoyage (7) est parallèle à une rangée de sièges de la matrice de sièges des seconds moyens de convoyage (7), de telle sorte que chaque caméra (10) fonctionne sur une ligne principale respective de la matrice de sièges des seconds moyens de convoyage (7), les caméras fixes (10) étant configurées et positionnées pour inspecter le fond et/ou le corps principal des paraisons (100).

5. Dispositif selon la revendication 4, dans lequel les caméras (10) de la seconde unité de détection (9) sont agencées dans une configuration mutuellement décalée le long de la trajectoire des seconds moyens de convoyage (7) .

6. Dispositif selon l'une quelconque des revendications précédentes, comprenant des moyens de tri (11) ayant une pluralité de sièges (12) pour recevoir des paraisons correspondantes des seconds moyens de convoyage (7), et au moins un mécanisme de libération/retenue pour libérer/retenir sélectivement les paraisons des/dans les sièges respectifs (12).

7. Dispositif selon la revendication 6, comprenant une unité de commande reliée aux unités de détection optique (6, 9) et au mécanisme de libération/retenue des moyens de tri (11) pour commander la libération des paraisons en fonction du traitement des données d'images reçues des unités de détection optique (6, 9).

8. Dispositif selon l'une quelconque des revendications précédentes, dans lequel les premiers moyens de convoyage (4) sont positionnés et configurés de manière à saisir une pluralité de paraisons (100) agencées sous forme de matrice directement à partir d'un moule (2) dans lequel les paraisons (100) sont fabriquées.

9. Procédé d'inspection de paraisons, comprenant les étapes suivantes :
- saisir une pluralité de paraisons (100) par leurs premières extrémités dans une première station de prélèvement (S1) en utilisant des premiers moyens de convoyage (4) sur lesquels les paraisons (100) sont disposées sous la forme d'une matrice ;
- transférer les paraisons (100) portées par les premiers moyens de convoyage (4) vers une deuxième station (S2) de libération des paraisons (100), suivant une trajectoire ayant au moins un tronçon transversal à l'axe longitudinal des paraisons (100) portées par les premiers moyens de convoyage (4) ;
- une première étape consistant à soumettre les paraisons (100) à une inspection optique au moyen d'une première unité de détection optique fixe (6), au cours de l'étape consistant à transférer les paraisons (100) de la première à la deuxième station (S1, S2) pendant que les paraisons (100) sont en mouvement, la première unité de détection optique (6) faisant face aux premiers moyens de convoyage (4) du côté de ces derniers qui reçoit les paraisons (100) au moins au niveau du tronçon transversal de la trajectoire pour inspecter au moins une portion des paraisons (100) qui fait face à la première unité de détection optique (6),
**caractérisé en ce qu'**il comprend en outre les étapes suivantes :
- transférer les paraisons (100) des premiers moyens de convoyage (4) à des seconds moyens de convoyage (7) à la deuxième station (S2), les seconds moyens de convoyage (7) ayant, sur un côté de ceux-ci, une pluralité de sièges respectifs pour recevoir une matrice de paraisons respectives (100) et mobiles entre la deuxième station (S2), où il font face aux premiers moyens de convoyage (4) pour recevoir une pluralité de paraisons (100) des premiers moyens de convoyage (4) et une troisième station (S3) pour décharger les paraisons (100), où les seconds moyens de convoyage (7) maintiennent les paraisons (100) par les extrémités des paraisons (100) opposées aux extrémités saisies par les premiers moyens de convoyage (4), les seconds moyens de convoyage (7) étant mobiles entre la deuxième et la troisième station (S2, S3) le long d'une trajectoire ayant au moins un tronçon transversal à l'axe longitudinal des paraisons (100) sur les seconds moyens de convoyage (7),
- une seconde étape consistant à inspecter de manière optique les paraisons (100) au moyen d'une seconde unité de détection optique (9) faisant face aux seconds moyens de convoyage (7) du côté de ces derniers qui reçoit les paraisons (100) au moins au niveau du tronçon transversal de la trajectoire des seconds moyens de convoyage (7) pour inspecter au moins une portion des paraisons (100) qui fait face à la seconde unité de détection optique (9) .

10. Procédé selon la revendication 9, dans lequel la première étape consistant à soumettre les paraisons (100) à une inspection optique est effectuée au moyen d'au moins une caméra linéaire (6a), qui est de forme allongée, située à une position stationnaire, au moins pendant la détection, et configurée pour effectuer une inspection au moins dans un plan de détection s'étendant transversalement au tronçon transversal de la trajectoire des premiers moyens de convoyage (4) pour inspecter l'une après l'autre les rangées consécutives de paraisons (100) portées par les premiers moyens de convoyage (4).

11. Procédé selon la revendication 9 ou 10, dans lequel la seconde unité de détection optique (9) comprend une pluralité de caméras fixes (10) situées dans une zone où la trajectoire suivie par les seconds moyens de convoyage (7) est parallèle à une rangée de sièges de la matrice de sièges des seconds moyens de convoyage (7), et dans lequel la seconde étape d'inspection est effectuée pendant le mouvement des seconds moyens de convoyage (7) en inspectant chaque ligne de paraisons (100) avec une caméra respective (10) de la pluralité de caméras, chaque ligne de paraisons (100) étant alignée sur la direction de mouvement des seconds moyens de convoyage (7) pendant la détection, les caméras fixes (10) étant configurées et positionnées pour inspecter le fond et/ou le corps principal des paraisons (100).

12. Procédé selon la revendication 11, dans lequel les caméras (10) de la seconde unité de détection (9) sont agencées dans une configuration mutuellement décalée le long de la trajectoire des seconds moyens de convoyage (7) .

13. Procédé selon l'une quelconque des revendications 9 à 12, dans lequel les seconds moyens de convoyage (7) sont configurés pour effectuer un mouvement de rotation entre la deuxième et la troisième station (S2, S3), de manière à faire varier l'orientation des paraisons (100) portées par les seconds moyens de convoyage (7).

14. Procédé selon l'une quelconque des revendications 9 à 13, dans lequel l'étape consistant à saisir les paraisons (100) dans la première station de prélèvement (S1) au moyen des premiers moyens de convoyage (4) est accomplie en prélevant une pluralité de paraisons (100) agencées sous forme de matrice directement à partir d'un moule (2) dans lequel les paraisons (100) sont réalisées, les paraisons (100) sur les premiers moyens de convoyage (4) étant orientées de telle manière que la bouche de chaque paraison (100) fait face à la première unité de détection (6) .

15. Machine de fabrication de paraisons, comprenant :
- un moule (2) de fabrication d'une pluralité de paraisons (100) simultanément, disposées sous forme de matrice ;
- des moyens de prélèvement agissant conjointement avec le moule (2) pour retirer les paraisons (100) du moule (2) en une seule étape consistant à transférer toutes les paraisons (100) tout en maintenant la configuration en matrice ;
- un dispositif d'inspection (1) selon une ou plusieurs des revendications précédentes 1 à 8, dans lequel les moyens de prélèvement sont définis par les premiers moyens de convoyage (4) du dispositif d'inspection (1).
